# EUROPÄISCHE PATENTSCHRIFT

(11) **EP 1 329 691 B1**
(45) Veröffentlichungstag und Bekanntmachung des Hinweises auf die Patenterteilung: **26.03.2014**
(21) Anmeldenummer: 03002934.2
(22) Anmeldetag: 16.01.2003
(51) Int. Cl.: G01C 15/00

(54) **Verfahren und Vorrichtung zum automatischen Auffinden von Zielmarken**
Method and device for automatic locating of targets
Procédé et dispositif pour la localisation automatique de cibles

(30) Priorität: 22.01.2002 EP 02001487
(43) Veröffentlichungstag der Anmeldung: 23.07.2003
(73) Patentinhaber: Leica Geosystems AG, 9435 Heerbrugg (CH)
(72) Erfinder: Benz, Paul, 9444 Diepoldsau (CH); Geser, Markus, 9403 Goldach (CH); Graf, Roland, 9033 Untereggen (CH); Pfiffner, Bruno, 8893 Hochwiese (CH); Buerki, Marcel, 9434 Au (CH); Landert, Marco, 9042 Speicher (CH); Hammerer, Markus, 6833 Fraxern (AT); Hinderling, Jürg, 9437 Marbach (CH); Hanns, Günther, 9443 Widnau (CH); Bayer, Gerhard, 88131 Lindau (DE)
(74) Vertreter: Kaminski, Susanne

(56) Entgegenhaltungen:
- CH-A- 676 042
- US-A- 6 031 606

## Beschreibung

Die Erfindung betrifft ein Verfahren zum automatischen Auffinden einer Zielmarke nach dem Oberbegriff des Anspruchs 1, eine Vorrichtung nach dem Oberbegriff des Anspruchs 8, eine Empfangseinheit nach dem Oberbegriff des Anspruchs 14, ein geodätisches Messgerät nach dem Oberbegriff des Anspruchs 18 und geodätische Vermessungssysteme nach Anspruch 20 oder 21.

Seit langem besteht in Zusammenhang mit geodätischen Vermessungen das Bedürfnis, im Gelände befindliche und zu vermessende geodätische Zielmarken automatisch zu erkennen und möglichst auch gleichzeitig grob zu vermessen. Diese Notwendigkeit wird durch die Tendenz zu vollautomatischen und integrierten Vermessungssystemen noch verstärkt.

Optoelektronische Vorrichtungen zur automatischen Auffindung und Lokalisierung von geodätischen Zielmarken, beispielsweise eines Retroreflektors oder einer Reflexfolie, werden dementsprechend bereits in verschiedenen Ausgestaltungsformen verwendet. Vorrichtungen dieses Typs ergänzen dabei die bei geodätischen Vermessungsaufgaben gebräuchlichen sensorischen Messmittel, insbesondere erbringt die Kombination mit einem motorisierten Theodoliten mit automatischer Zielerfassung erhebliche Vorteile.

Vorrichtungen zum Auffinden von Zielmarken und damit auch die Erfindung betreffen dabei im weiteren Sinn alle Messgeräte, die durch direkt vom Menschen zu handhabende Richtmittel auf Messpunkte optisch ausgerichtet werden. Unter dem Begriff "geodätisches Messgerät" soll in diesem Zusammenhang verallgemeinernd stets ein Messinstrument verstanden werden, das über Vorrichtungen zur Messung oder Überprüfung von Daten mit räumlichem Bezug verfügt oder auch zur Ausrichtung dient. Insbesondere betrifft dies die Messung von Entfernung und/oder Richtung bzw. den Winkeln zu einem Bezugs- oder Messpunkt. Darüber hinaus können jedoch noch weitere Vorrichtungen, z.B. Komponenten zur satellitengestützten Ortsbestimmung (bspw. GPS oder GLONASS), vorhanden sein, die für erfindungsgemässe Messungen verwendet werden können. Insbesondere sollen hier unter einem geodätischen Messgerät Theodoliten, Nivelliere oder auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung, diese Systeme werden hiermit ebenfalls unter dem Begriff "geodätisches Messgerät" erfasst.

Die heute gebräuchlichen, automatisierten Theodoliten, als ein Beispiel für ein geodätisches Messgerät, sind nicht nur mit Winkel- und Distanzsensoren sondern auch mit einer optoelektronischen Zielsuch-, Positionierungs- und Zielpunktvermessungsvorrichtung, im folgenden Automatische Zielerfassungseinheit (AZE) genannt, bestückt. Solche Theodolite sind in der Lage, den Zielpunkt automatisch anzufahren und die Raumkoordinaten zu vermessen. Im Fall einwandfreier Funktion ist die Zeitersparnis mit solchen automatisierten Instrumenten erheblich. Ist das System zudem über Fernbedienung, beispielsweise vom Zielpunkt aus als Ein-Mann-Station bedienbar, so ist die Arbeitsleistung und die damit erzielte Kostenersparnis noch ausgeprägter.

Ein wesentlicher Bestandteil dieser automatisierten Vermessungs-Instrumente ist die AZE. Bekannt sind diverse Lösungen wie CCD- oder CMOS-Kameras mit Bildverarbeitung, optoelektronische positionssensitive Halbleiterdetektoren (PSD), 4 Quadranten-Dioden, akustooptische Strahlscanner usw.

Zur Hauptfunktion dieser AZE gehört die exakte Vermessung einer Zielmarke oder eines Reflektors mit mm-Genauigkeit bei kurzen und langen Distanzen, wobei Distanzen über 1000m ebenfalls vermessen werden können. Um diese mm-Genauigkeit zu erreichen, haben diese Suchvorrichtungen durchwegs den Nachteil eines eingeschränkten Sensor-Gesichtsfelds. Nur bei kleinen bis mittleren Gesichtsfeldern von wenigen Grad lassen sich Punktgenauigkeiten von <5mm bei 1000m erreichen.

Ein wesentlicher Nachteil eines kleinen Sensor-Gesichtsfelds ist die erschwerte Zielsuche, da sich die zu vermessende Zielmarke zu Beginn einer Messung oft ausserhalb des Gesichtsfelds befindet. Bei vielen Anwendungen, insbesondere im Kurzdistanzbereich, mit welchem ein weitwinkliges Arbeitsfeld einhergeht, besitzt ein ausgedehntes Sensor-Gesichtsfeld Vorteile.

Heute kommen bei der Zielsuche grundsätzlich 2 Methoden zum Einsatz. Bei der einen Methode sucht der Sensor nach einem programmierten Algorithmus oder Verfahren das Ziel selbständig, dies braucht aber Zeit wegen des kleinen Gesichtsfelds, bei der zweiten Methode wird das Suchfeld durch den Benutzer definiert, sodass die Zielobjektsuche gerichteter und mit geringerem Zeitaufwand abläuft, dies hat aber den Nachteil, dass die Suchfeldkonfiguration bei jedem Standortwechsel neu programmiert werden muss.

Ein weiterer Nachteil existiert bei der Verfolgung von bewegten Zielobjekten. Bei zu raschen oder ruckartigen tangentialen Bewegungen zur Zielrichtung des automatisierten Theodolits kann es vorkommen, dass die Zielmarke aus dem Gesichtsfeld der Zieldetektionsvorrichtung herausfährt. Ein auch nur kurzzeitiger Zielverlust kann dabei den effizienten Verfolgungsprozess stören.

Weitere Mängel bei Vorrichtungen mit AZE des Stands der Technik sind darüber hinaus die fehlende Robustheit bei (Eigen-)Reflexen an Fremdzielen und eine fehlende bzw. nicht hinreichend sichere Zielerkennung. Fremdziele sind solche mit hohem Reflexionsgrad, wie z.B. Verkehrstafeln. Bei der Zielerkennung ist die Identifikation der zu vermessenden Zielmarke bisher nicht zufriedenstellend gelöst, da insbesondere die fehlende Robustheit bei Sonnenreflexen an Gegenständen mit glänzender Oberfläche nachteilig wirkt.

Zwar können Sonnenreflexe an Gegenständen mit modernen Vorrichtungen erkannt werden, jedoch braucht die hierfür notwendige Analyse Zeit, wodurch der Suchprozess bei jedem Reflex abgebremst wird.

Bei Grobsuchsensoren des Stands der Technik entsteht aufgrund des kleinen Sensor-Gesichtsfelds ein zu grosser Zeitbedarf bei der Grobzielsuche. Das kleine Gesichtsfeld wirkt sich dabei überproportional aus, erstens besitzt dieses einen kleineren Abdeckungsbereich der Umgebung, so dass das Abfahren des Suchbereichs einen längeren Zeitraum erfordert. Zweitens muss das Abfahren mit einer geringeren Scan-Geschwindigkeit wegen kurzer Verweildauer des Objekts im Gesichtsfeld erfolgen. Eine fächerartige Gestaltung des Erfassungsbereichs der Sensoren ist diesbezüglich bereits besser geeignet, jedoch sind die Gesichtsfelder, gebildet durch Fächerwinkel von typischerweise 1 bis 5 Grad, nach wie vor viel zu klein.

Aus der Patentschrift CH 676 042 ist eine Vorrichtung mit fächerartigem Sender und Empfänger bekannt, welche in einem drehbaren Messkopf untergebracht ist. Von der Sendeeinheit werden Lichtimpulse in einem Lichtfächer ausgesendet, die reflektierten Impulse werden hinsichtlich Winkelinformation entsprechend ausgewertet. Diese Vorrichtung hat jedoch den erheblichen Nachteil, nicht nur die zu vermessenden Zielobjekte sondern auch fremde, störende Objekte anzufahren. Solche Objekte sind unter anderem optisch reflektierende Gegenstände, wie Schaufenster oder Verkehrstafeln, aber auch gespiegeltes Sonnenlicht an Motorfahrzeugen.

Eine Weiterführung der obigen Zielsuchvorrichtung zur groben Bestimmung der Zielkoordinaten ist in CH676041 beschrieben. Dabei erfolgt eine Kombination mit einer optoelektronischen Vorrichtung zur Feinmessung. Die eigentliche Zielsuchvorrichtung spannt zwei senkrecht aufeinander stehende Fächer auf, mit denen die Lage des Zielpunktes zweidimensional grob vermessen wird, die anschliessende Feinvermessung mit der zweiten Vorrichtung kann dann ohne Zielsuchvorgang durchgeführt werden. Der Nachteil dieser Kombination ist ebenfalls die fehlende Robustheit bezüglich eines fehlerhaften Einlockens auf Fremdobjekte.

Eine weitere Vorrichtung ist aus der Schrift US 6,046,800 bekannt. Geoffenbart wird ein motorisierter Theodolit, der mit einem Sensor zur Erfassung der Zielpunktkoordinaten bestückt ist, bestehend aus einem oder zwei fächerartigen Sendebündeln und zwei optischen Empfangskanälen. Eine Besonderheit dieser Vorrichtung besteht darin, dass die optischen Achsen des Sendekanals und der beiden Empfänger triaxial in einer Ebene liegen, dies ermöglicht bei einer Schwenk- oder Suchbewegung des Theodolits die Unterscheidung von normal reflektierenden und retroreflektierenden Objekten durch Auswertung der zeitlichen Abfolge der beiden Empfangssignale. Diese Methode der empfängerseitigen Pupillenteilung hat aber den Nachteil, dass dieses Unterscheidungsmerkmal nur bei kurzen Distanzen existiert, zudem ist die Vorrichtung wegen den beiden Empfangskanälen aufwendig bzw. teuer.

Aus der Schrift DE 196 23 060 ist ebenfalls ein geodätisches Gerät zur Grobzielsuche bekannt. Diese Vorrichtung besteht aus einem optoelektronischen, im wesentlichen als Scanner ausgebildeten Vertikalwinkelsucher. Sende- und Empfangsstrahl werden dabei um eine (zweite) horizontal liegende motorisch angetriebene Achse rotiert. Beabsichtigt wird eine grosse Reichweite, die aufgrund der parallel kollimierten optischen Bündel erreicht wird, diese Eigenschaft wird jedoch mit dem Nachteil der punktartigen und damit sequentiellen und zeitaufwendigen Raumabtastung erkauft. Beim Suchvorgang wird der rasch vertikal rotierende Sensorstrahl gleichzeitig langsam in horizontaler Richtung bewegt. Ein weiterer Nachteil ist der Bedarf eines zusätzlichen Winkelmesssystems an der Scannerachse zur Grobbestimmung des Vertikalwinkels. Würde der Raum hingegen mit einem fächerartigen optischen Messbündel abgesucht, so wäre lediglich eine eindimensionale Drehbewegung um eine Achse notwenig.

Ein wesentlicher Nachteil aller bisher bekannten Vorrichtungen ist die ungenügende Robustheit gegen stark reflektierende Fremdobjekte, die versehentlich als Zielobjekt interpretiert werden, wie auch Störung oder zumindest Verzögerung des Suchvorgangs durch starkes Sonnenlicht oder Sonnereflexe.

In den meisten Fällen wird der Suchvorgang manuell über Sprechfunk oder Datenfunk unterstützt. Bei der im Dokument DE 197 334 91 beschriebenen Vorrichtung wird mittels einer zusätzlichen am Zielobjekt angebrachten optischen Empfangseinheit geprüft, ob der Suchstrahl des Theodoliten das Zielobjekt trifft. Wird ein entsprechendes Suchsignal empfangen, so meldet das Zielobjekt über Datenfunk seine Identifikation an den Theodoliten. Diese Lösung ist zwar robust, beeinträchtigt aber die Ergonomie am Zielobjekt.

Die Aufgaben der vorliegenden Erfindung bestehen in einer Verbesserung der eingangs definierten Sensoreinrichtungen.

Dabei besteht eine Aufgabe darin, ein geodätisches Messgerät zur Grobzielsuche bereitzustellen, das in Hinblick auf eine möglichst schnelle Lokalisierung und Identifikation von Zielobjekten und deren Ermittlung der Grobkoordinaten geeignet ist und das eine verkürzte Suchzeit bei einer Reichweite von bis zu 1000m besitzt. Die Geschwindigkeit der Zielsuche stellt ein Hauptproblem dar, da diese nach einem grossen Sensorgesichtsfeld verlangt, das durch einen entsprechend grossen Fächerwinkel erreicht wird. Mit grösser werdendem Fächerwinkel nimmt jedoch die Reichweite ab. Es ist daher die Aufgabe der Erfindung den Reichweitenbereich von geodätischen Applikationen und gleichzeitig eine hohe Suchgeschwindigkeit zu erreichen.

Eine weitere Aufgabe besteht in Ermöglichung eines Suchvorgangs, der gegenüber Fremdlicht und Eigenreflexe an Fremdzielen robust ist. Der Suchvorgang darf dabei nicht durch Fremdziele mit hohem Reflexionsgrad oder durch Gegenstände mit Sonnenreflex zeitlich verzögert oder unterbrochen werden. Dabei umfasst die Aufgabe die simultane Identifikation der zu vermessenden Zielobjekte anhand geeigneter Identifikations-Merkmale auch während des Suchlaufs.

Diese Aufgaben werden erfindungsgemäss durch die kennzeichnenden Merkmale der Ansprüche 1 bzw. 8 sowie durch die kennzeichnenden Merkmale der Unteransprüche gelöst. Eine Empfangseinheit, ein geodätisches Messgerät und geodätische Vermessungssysteme ergeben sich aus den Ansprüchen 14, 18, 20, 21.

Die vorliegende Erfindung betrifft im wesentlichen eine optoelektronische Zielsuchvorrichtung bestehend aus einem fächerartigen Sendekanal, welcher das zu lokalisierende Ziel bestrahlt, einem fächerartigen Empfangskanal, welcher das vom Zielobjekt reflektierte Licht empfängt, einem motorisierten Messgerät, beispielsweise einem Theodoliten, welches sich um eine der beiden Achsen während dem Suchlauf bewegt, mindestens einer elektronischen Auswerteeinheit zur Bestimmung der groben Zielpunktlage, Signalstärke des reflektierten Signals, der Ausdehnung des Zielobjekts in Scanrichtung, und der Distanz zum Zielobjekt. Optional kann auch die Dauer des reflektierten optischen Signals erfasst werden.

Sowohl die Ebenen der beiden optoelektronischen Lichtfächer als auch die Drehachse des Theodolits (=Scanachse für den Suchlauf) sind parallel zueinander orientiert. Im folgenden sollen die Begriffe der horizontalen und vertikalen Bewegung so verstanden werden, dass bei einer Bewegung stets eine entsprechende Komponente und eine dementsprechende Bewegung vorhanden sind. Eine horizontale Bewegung der Sendeeinheit kann somit insbesondere auch durch eine gegenüber dem Horizont geneigte Bewegung erreicht werden.

Ein leistungsstarker und sensorisch empfindlicher Laufzeitmesser dient als Zielsuchvorrichtung. Geeignete Laufzeitmesser mit Impulsmodulation haben grosse Reichweite und kurze Messzeit. Die erreichbaren optischen Sendeleistungen mit den lediglich nur Millimeter grossen Pulslaserdioden liegen dabei über 100 Watt. Dadurch lassen sich auch bei fächerartiger Aufweitung des Sendestrahls die geforderten Reichweiten für geodätische Applikationen realisieren. Während eines Suchlaufs wird der Laufzeitmesser im Dauermessmodus betrieben. Dabei emittiert der Sender optische Impulse mit einer Rate im kHz-Bereich. Da die Vorrichtung im Einzelschussauswerteverfahren betrieben wird, sind Informationen über die gescannte Umgebung im Nanosekunden- bis Mikrosekundenbereich vorhanden. Die empfangenen Impulse werden mit einem schnellen AD-Wandler abgetastet, wodurch ein Intensitätsbild der Umgebung entsteht. Dabei können die abgetasteten Impulse beispielsweise in einem 2D-Speicher abgelegt und nachfolgend ausgewertet werden oder aber es erfolgt zeitnah eine erste Analyse und die weitere Auswertung basiert auf diesen ersten Ergebnissen, die z.B. eine Anhäufung oder ein Zusammenzug der Impulse sein können.

Die Dimensionierung des optischen Sende-Fächers ist so bemessen, dass dieser die typischerweise zu vermessende Umgebung in vertikaler Richtung abdeckt. Die Divergenz in senkrechter Richtung zum Fächer ist vorzugsweise beugungsbegrenzt schmal.

Eine Suche mit einer erfindungsgemässen Vorrichtung liefert als Output ein Intensitätsbild der abgesuchten Umgebung. Die Auswertung des 2-dimensionalen Intensitätsbildes kann entweder nach erfolgtem Scan oder aber auch simultan bzw. zeitnah während der Aufnahme erfolgen. Mögliche Ergebnisse einer solchen Auswertung können beispielsweise
- Intensitätsmaxima allfälliger Zielobjekte,
- ein Zeitpunkt der Zielfindung oder äquivalent auch Winkel zum Zielobjekt oder die
- Distanz zum Zielobjekt sein.

Die Robustheit gegenüber sonnenreflektierenden Oberflächen und spiegelnden Fremdzielen wird erfindungsgemäss verbessert bzw. erst erreicht. Wegen der starken Laserimpulse sind sonnenreflektierende Oberflächen im 2-dimensionalen Intensitätsbild aus zwei Gründen nicht sichtbar. Erstens ist die Laserstrahlung des Senders spektral schmal und gestattet ein vergleichbar schmales Interferenzfilter im Empfangsstrahlengang, das Sonnenlicht wird weitgehend abgeblockt. Zweitens erzeugen die Impulslaser starke Lichtblitze, deren Strahldichte grösser ist als diejenige von Sonnenreflexen. Eine Robustheit gegenüber sonnenreflektierenden Oberflächen wird hierdurch erreicht.

Die erforderliche Robustheit gegenüber Fremd- oder Störzielen ist schwieriger zu erreichen. Zunächst erscheinen im 2-dimensionalen Intensitätsbild neben dem eigentlichen, zu lokalisierenden Zielobjekt oft weitere optisch reflektierende Objekte.

Im Nahbereich unter 10m kann das Problem durch eine besondere biaxiale Anordnung der beiden optischen Fächer gelöst werden. Sender und Empfänger liegen biaxial nebeneinander, wobei der seitliche Versatz senkrecht zu den Fächern gerichtet ist. Die Gesichtsfelder von Sender und Empfänger überlappen dadurch unter 10m nicht. Einfach-reflektierende Objekte, wie z.B. Spiegel, werden in diesem Distanzbereich vom Empfänger nicht gesehen, nur retroreflektierende Zielobjekte mit seitlichem Versatz des gespiegelten Strahls, wie beispielsweise die bei Vermessungsaufgaben gebräuchlichen Tripelprismen, erzeugen ein messbares Empfangssignal. Damit wird die Robustheit unter 10m durch Biaxialität gelöst.

Bei allen anderen Distanzen müssen die richtigen Zielobjekte aus den im 2-dimensionalen Intensitätsbild enthaltenen Objekten erfindungsgemäss identifiziert werden.

Jeder Zieltyp erzeugt sowohl einen charakteristischen Signalverlauf als auch eine charakteristische Ausdehnung als Funktion der Distanz. Zielobjektidentifikation ist daher anhand der beiden distanzabhängigen Messkurven möglich. Bei der gemessenen jeweiligen Objektdistanz wird geprüft, ob Objektausdehnung und Signalstärke im Toleranzband des gesuchten Zielobjekts sind. Je nach konkreten Zielparametern und Messbedingungen genügt es unter Umständen, lediglich einen Vergleich bezüglich nur eines Grenzwertes durchzuführen, z.B. einen Vergleich gegenüber dem unteren Grenzwert bezüglich des Signals und gegenüber dem oberen Grenzwert bezüglich der Objektgrösse.

Wird nun während eines Scans ein reflektierendes Objekt angestrahlt, so werden laufend Signal und Objektausdehnung mit den geladenen Toleranzwerten verglichen. Sobald der Sendefächer ein allfälliges Objekt komplett überstrichen hat und alle Messwerte innerhalb der Toleranzwerte liegen, ist ein Zielobjekt identifiziert und gefunden. Je nach Anwendung wird an dieser Stelle der Suchprozess gestoppt oder es werden lediglich die Koordinaten, wahlweise auch Parameter wie Signal und Ausdehnung, gespeichert und der Suchprozess ohne Scanunterbrechung fortgesetzt, so dass weitere Zielobjekte gesucht und gefunden werden können.

Der durchaus mögliche Fall, dass bei gewissen Fächerstellungen mehrere Zielobjekte in unterschiedlicher Distanz gleichzeitig auftreten, ist aufgrund der Distanzmessung problemlos zu handhaben.

In vielen Anwendungen wird unmittelbar nach der Instrumentenaufstellung als erstes die gesamte Umgebung abgescannt. Hierbei wird ein 2-dimensionales Intensitätsbild erzeugt, welches alle lichtstark reflektierenden Objekte enthält. Die Koordinaten der nicht relevanten Zielobjekte wie Störund Fremdziele werden berechnet und gespeichert. Mit der Kenntnis der Koordinaten aller Störobjekte und Fremdziele können diese von allen weiteren Suchläufen ausgeblendet werden. Damit lässt sich zusätzlich Suchzeit einsparen, da die für die Vermessungsaufgabe nichtrelevanten Objekte sensorisch nicht mehr existieren.

Ist ein Zielobjekt gefunden, so sind Distanz und eine Richtungskoordinate bekannt. Als nächstes wird die zweite Raumrichtung gemessen. Diese wird nach dem bekannten Suchverfahren mit der im Theodoliten vorhandenen automatisierten Zielerfassungseinheit (AZE) realisiert. Der AZE-Such- und Messvorgang ist in diesem Fall sehr effizient und schnell, da nur noch 1-dimensional bewegt bzw. gefahren werden muss. Die Kombination der beiden Vorrichtungen bewirkt einen zusätzlichen Nutzen. Da die AZE die Position des Zielobjekts auf Winkelsekunden genau misst, sind am Ende des AZE-Suchund Messprozess die Zielpunktkoordinaten nicht nur grob, sondern mit geodätischer Genauigkeit im mm-Bereich bis submm-Bereich bekannt.

Die Kombination der erfindungsgemässen Zielsuchvorrichtung mit einer automatisierten Zielerfassungseinheit (AZE) ermöglicht somit die komplette und mm-genaue Bestimmung der 3D-Koordinaten von Zielobjekten.

Eine wesentliche Eigenschaft des erfindungsgemässen Verfahrens bzw. der Vorrichtung ist die Geschwindigkeit des Suchvorgangs. Eine Erschwernis liegt in der grossen, durch den geodätischen Distanzbereich gegebenen Signaldynamik.

Bei der erfindungsgemässen Vorrichtung wird diese Aufgabe durch senderseitige Massnahmen unterstützt bzw. gelöst. Die grosse Signaldynamik kann durch Aussenden mehrerer Laserimpulse unterschiedlicher Intensität abgefangen werden. Die Signaldynamik wird dadurch auf Sender und Empfänger aufgeteilt. Im Kurzdistanzbereich werden vom Empfänger die schwachen Pulse mit kleinerer Amplitude und im Langdistanzbereich die starken Pulse mit hoher Amplitude ausgewertet.

Eine geeignete Verwendung der erfindungsgemässen Vorrichtung stellt die modulare Integration in einem motorisierten Theodolit mit automatischer Zielerfassungseinheit (AZE) gemäss Patent US 6,031,606 dar.

Das erfindungsgemässe Verfahren sowie eine erfindungsgemässe Vorrichtung und ein erfindungsgemässes geodätisches Messgerät werden nachfolgend anhand von in der Zeichnung schematisch dargestellten Ausführungsbeispielen rein beispielhaft näher beschrieben. Im einzelnen zeigen
- Fig.1a-b: die Prinzipdarstellung zweier erfindungsgemässen Realisierungsformen von Verfahren und Vorrichtung mit vertikalem Fächer und einfacher sowie doppelter Impulsmodulation;
- Fig.2: einen Ausschnitt aus einem 2-dimensionalen Intensitätsbild mit Zielobjekt für ein erfindungsgemässes Verfahren;
- Fig.3: die schematische Darstellung der Verwendung eines Plausibilitätsbands (Toleranzwerttabelle) für die Signalamplitude;
- Fig.4: die schematische Darstellung der Verwendung eines Plausibilitätsbands (Toleranzwerttabelle) für die scheinbare Objektgrösse (Objektausdehnung);
- Fig.5a-b: die Darstellung der unterschiedlichen Bedingungen für die Biaxialität von Sendeeinheit und Empfangseinheit zum vorzugsweise beugungsbegrenzten Sendestrahl mit Retroreflektor und mit einfach spiegelndem Objekt;
- Fig.6a-c: die Darstellung von verschiedenen Ausführungsformen der erfindungsgemässen Empfangseinheit mit strukturiertem Fächer, horizontalem Fächerbüschel und zweidimensional-strukturiertem Gesichtsfeld;
- Fig.7a-b: die figürliche Darstellung eines erfindungsgemässen automatisierten geodätischen Messgerätes und die Kombination des Suchvorgangs mit AZE;
- Fig.8: ein Blockschema als Beispiel für eine schaltungs-seitige Realisierung der erfindungsgemässen Vorrichtung; und
- Fig.9: die figürliche Darstellung des erfindungsgemässen geodätischen Vermessungssystems.

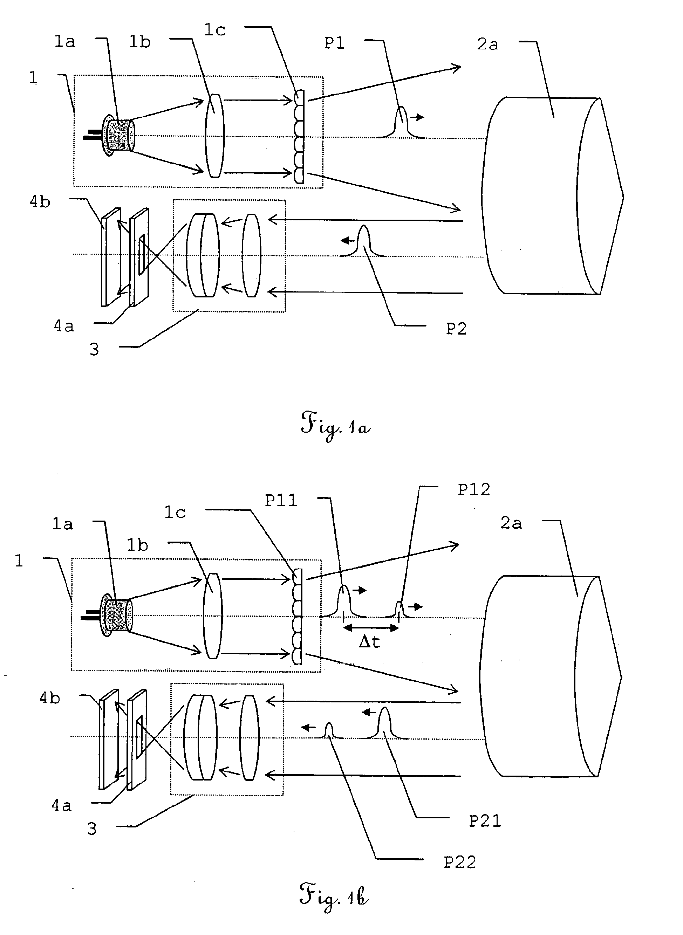

Fig.1a-b zeigt zwei mögliche Realisierungsformen einer erfindungsgemässen Vorrichtung zur Durchführung des erfindungsgemässen Verfahrens.

In Fig.1a wird durch eine in der Sendeeinheit 1 angeordnete Pulslaserdiode 1a als Sendediode mit Impulsmodulation elektromagnetische Strahlung mit Pulsen P1 als Signal erzeugt. Eine geeignete Pulsdauer beträgt beispielsweise 50 Nanosekunden. Die hierdurch erzeugten starken Signale mit optischen Leistungen im Watt-Bereich sind robust gegen Fremdlichtreflexe. Sogar sonnenbeschienene spiegelnde Oberflächen sind dadurch schwächer als der empfangene Signalimpuls.

Die erzeugte Strahlung wird in einem senkrecht orientierten Fächer emittiert, der vorrichtungsseitig durch eine Kombination aus einer Linse 1b und einem Zylinderlinsenarray 1c erzeugt wird. Alternativ können jedoch auch andere geeignete Komponenten verwendet werden, wie z.B. Mikrolinsenarrays oder diffraktive optische Elemente. Nach der Emission und einer Reflexion an einer Zielmarke, die beispielsweise einen Retroreflektor 2a als ein Beispiel für einen geeigneten Reflektor aufweist, wird der reflektierte Puls P2 wieder von der Vorrichtung empfangen.

Dabei wird empfängerseitig das fächerartige Gesichtsfeld durch eine Schlitzblende 4a vor einer Empfangsdiode als photosensitivem Element 4b zusammen mit einem Objektiv 3 mit zylindrischer Wirkung realisiert.

In der in Fig.1b dargestellten zweiten Realisierungsform werden vorrichtungsseitig in der Sendeeinheit 1 die gleichen Komponenten Pulslaserdiode 1a, Linse 1b und Zylinderlinsenarray 1c verwendet. Allerdings werden jetzt als Beispiel zwei Laserimpulse mit unterschiedlicher Intensität gesendet. Auch hier ist die Pulsrate im kHz-Bereich. Die emittierte Strahlung weist nun einen Puls P11 mit grösserer und einen Puls P12 mit niedrigerer maximaler Pulshöhe auf, die zeitlich aufeinanderfolgen und somit in dieser Realisierungsform einen Doppelpuls darstellen.

Nach einer Reflektion an der Zielmarke, die wiederum einen Retroreflektor 2a aufweist, werden die reflektierten Pulse P21 und P22 von der Empfangseinheit erfasst. Diese besteht wiederum aus einem Objektiv 3 mit zylindrischer Wirkung und einer Schlitzblende 4a vor einer Empfangsdiode als photosensitivem Element 4b.

Beim Empfang der Impulse unterschiedlicher Intensität wird derjenige ausgewertet, welcher im Empfangsdynamikbereich des Empfängers liegt. In diesem Beispiel wird für eine kürzere Messdistanz, deren Grenze beispielsweise bei 20 m liegen kann, der reflektierte Puls P22 mit niedriger Pulshöhe und für eine grössere Messdistanz der reflektierte Puls P21 mit grösserer Pulshöhe verwendet.

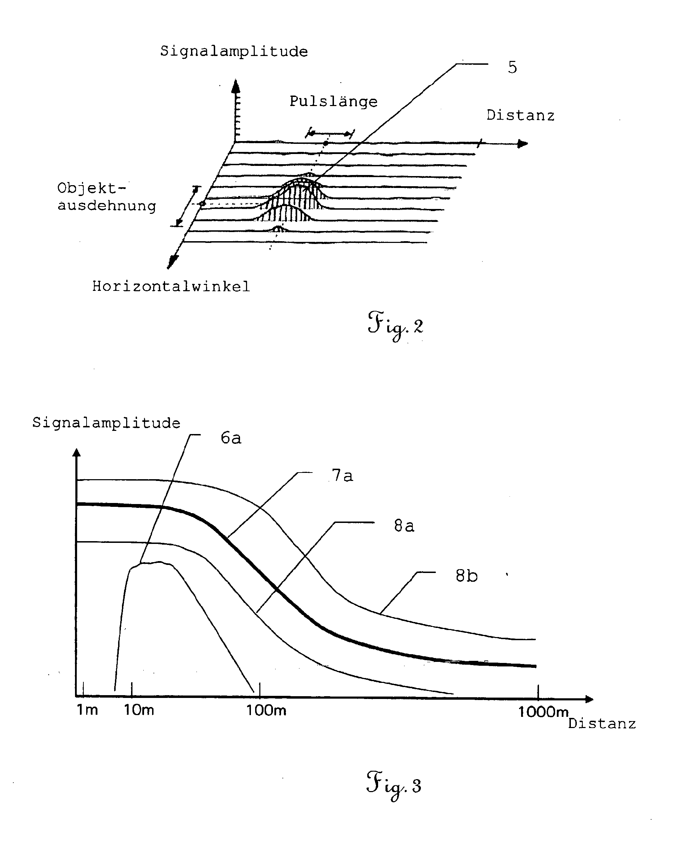

In Fig.2 ist schematisch ein Ausschnitt aus einem zweidimensionalen Intensitätsbild mit Zielobjekt dargestellt. Die einzelnen, vom Empfänger detektierten Signalimpulse 5 werden in Abhängigkeit vom Zeitpunkt ihrer Emission mit zeitlich aufgelöster Abtastung erfasst. Bei jedem Laserimpuls entsteht im Intensitätsbild eine weitere Signalspur längs der Distanzachse. Mit der zeitlich aufgelösten Abtastung erfolgt eine Zuordnung hinsichtlich der Distanz, und die Emissionszeitpunkte legen den zur Signalspur gehörigen Horizontalwinkel fest.

Im zweidimensionalen Intensitätsbild können nun durch eine Analyse des erfassten Verlaufs der Signalstärken Objekte identifiziert und deren Objektausdehnung und Distanz gemessen werden. Durch eine Plausibilitätsprüfung erfolgt eine Differenzierung von Zielmarke und Fremdziel oder Störeinfluss.

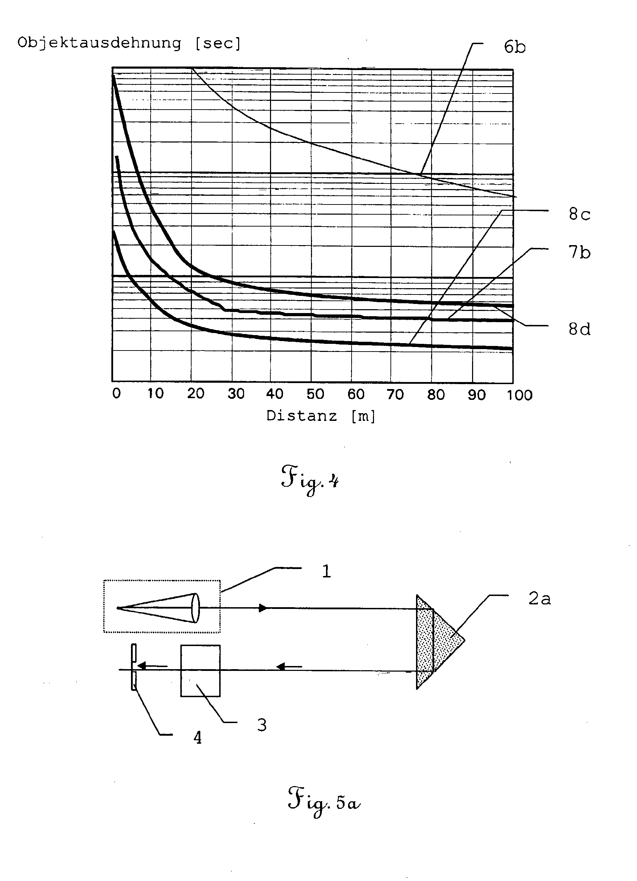

Die Fig.3 und Fig.4 zeigen schematisch die Durchführung einer solchen Plausibilitätsprüfung zur Erkennung von Zielmarken. Die Basis der Plausibilitätsprüfung bilden das Signal-Distanz-Modell und das Objektbreite-Distanz-Modell (Toleranzwerttabellen). Die Objektbreite oder Objektausdehnung wird anhand des Produktes aus Pulszahl und Winkelgeschwindigkeit berechnet. Zusätzlich ist eine Berücksichtigung bzw. Berechnung des Reflexionsgrads des Zielobjekts möglich.

Die Objektausdehnung ist ein wichtiges Erkennungsmerkmal, da Verkehrschilder durchwegs, im Vergleich zu den eigentlichen Zielmarken, grosse Reflexionsfläche aufweisen. Für diese objektspezifischen Merkmale kann pro Zieltyp eine eigene, spezifische Toleranzwerttabelle geführt werden. Dabei können auch frei wählbare Toleranzwerttabelle für besondere, nutzerspezifische Zieltypen eingesetzt werden. Auch können alternative oder ergänzende Plausibilitätsprüfungen anhand anderer Kriterien durchgeführt werden. Beispielsweise können gegebenenfalls spektral unterschiedliche Reflexionsvermögen verschiedener Objekte analysiert werden.

Fig.3 zeigt ein Beispiel für eine Plausibilitätsprüfung hinsichtlich der Signalamplitude unter Verwendung eines Plausibilitätsbandes (Toleranzwerttabelle). Die Plausibilitätsprüfung erfolgt, indem geprüft wird, ob ein gemessener Wert einer Zielmarke innerhalb eines Plausibilitätsbandes liegt, das durch jeweils eine untere Toleranzgrenze 8a und eine obere Toleranzgrenze 8b definiert wird. Die theoretische Kurve aller Werte einer Zielmarke wird durch das entfernungsabhängige Profil 7a dargestellt. Beispielsweise würde ein Wert für ein Fremdziel auf dessen Profil, wie z.b. dem Profil 6a eines Verkehrsschildes, und damit ausserhalb des Plausibilitätsbandes liegen und somit als Fremdziel identifiziert werden.

Je nach konkreter Situation, wie z.B. der Charakteristik der Zielmarken und der möglichen Fremdziele, kann es hinreichend sein, lediglich mit einer Toleranzgrenze zu arbeiten, wenn diese eine sichere Trennung von Zielmarke und Fremdzielen garantiert.

Ein anderes Verfahren zur Plausibilitätsprüfung hinsichtlich der scheinbaren Objektgrösse, wiederum unter Verwendung eines Plausibilitätsbandes (Toleranzwerttabelle), ist in Fig.4 dargestellt. Dargestellt ist eine Toleranzwerttabelle, welche die scheinbare Objektbreite in Zeiteinheiten mit logarithmischer Skala bei einem horizontalen Scan des Messgerätes für die unterschiedlichen Entfernungen beinhaltet, in denen ein Ziel aufgefunden werden kann. Eine gemessene scheinbare Ausdehnung für eine Zielmarke, für die wiederum das theoretische Profil 7b dargestellt ist, gibt deren scheinbare Ausdehnung in der Horizontalen wider. Auch hier erfolgt eine Prüfung, ob der gemessene Wert innerhalb des durch die untere Toleranzgrenze 8c und die obere Toleranzgrenze 8d definierten Plausibilitätsbandes liegt. Ein Wert für ein Fremdziel würde beispielsweise auf oder in der Nähe dessen theoretischen Profils 6b und damit ausserhalb des Plausibilitätsbandes liegen.

Die Fig.5a-b zeigen die Verhältnisse bei der Reflektion der emittierten Pulse an einem Retroreflektor im Vergleich zur Reflektion an einem Fremdziel für den Nahbereich.

In Fig.5a wird schematisch die Reflektion an einem Retroreflektor 2a im Nahbereich dargestellt. Die Gesichtsfelder von Sendeeinheit 1 und Empfangseinheit, welche Objektiv 3 und Detektor 4 aufweist, sind biaxial angeordnet, sodass diese im Nahbereich unter 5m nicht überlappen und dadurch robust gegen Fremdobjekte ohne Retroreflektion sind. Die von der Sendeeinheit 1 emittierte Strahlung wird vom Retroreflektor 2a parallel versetzt reflektiert und kann somit in der durch Objektiv 3 und Detektor 4 definierten Achse der Empfangseinheit aufgenommen werden.

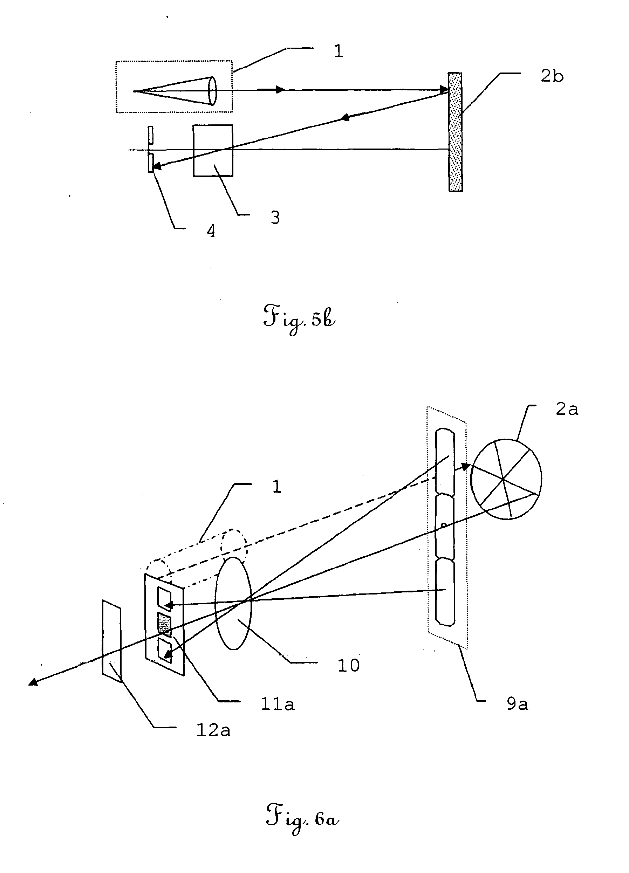

Die hiervon abweichende Situation bei der Reflektion an einem Fremdziel 2b ist in Fig.5b dargestellt. Das Fremdziel führt zu keinem parallelen Versatz der von der Sendeeinheit 1 emittierten Strahlung, so dass diese nicht in der durch Objektiv 3 und Detektor 4 definierten Achse aufgenommen werden kann. Eine biaxiale Anordnung der Gesichtsfelder von Sendeeinheit 1 und Empfangseinheit ermöglicht somit die Unterdrückung einer Erfassung von Fremdzielen für den Nahbereich.

Um die Suchzeit zusätzlich zu verkürzen, sind auf Empfängerseite mehrere Realisierungsformen möglich. Das fächerförmige Gesichtsfeld kann in mehrere Sektoren unterteilt werden, alternativ können aber auch mehrere Fächer nebeneinander verwendet werden. Die Fig.6a-c zeigen dementsprechend alternative Ausführungsformen einer erfindungsgemässen Empfangseinheit mit strukturiertem Fächer, horizontalem Fächerbüschel und zweidimensional-strukturiertem Gesichtsfeld. In allen Beispielen wird empfangsseitig der Sensorfächer in Segmente aufgeteilt. Dadurch wird eine grobe räumliche Positionsbestimmung auch in Fächerrichtung möglich.

Fig.6a zeigt die Strukturierung des Fächers der Empfangseinheit. Die von der Sendeeinheit 1 emittierte und von einem Retroreflektor 2a reflektierte Strahlung wird nun durch eine Unterteilung des Empfangsfächers mit zusätzlicher Ortsinformation empfangen. Diese Unterteilung des Fächers 9a in mehrere Sektoren lässt sich durch eine Schlitzblende 11a im ersten Brennpunkt der zylindrischen Empfängeroptik realisieren. Bei der in Fig. 6a dargestellten Ausführungsform kann eine schaltbare Schlitzblende eingesetzt werden, bei der wahlweise die Transmission des relevanten Schlitzes verändert werden kann. Das photosensitive Element 12a ist im Bereich der zweiten Brennebene plaziert, um das Gesichtsfeld der Empfangsoptik 10 in die Raumrichtung senkrecht zum Fächer mit hoher Transmission abzudecken. Durch die Schlitzblende 11a wird der Empfangsfächer in beispielsweise 3 Sektoren unterteilt, was eine grobe Positionsmessung auch in vertikaler Richtung ermöglicht. Die vom Retroreflektor 2a kommende Strahlung passiert im dargestellten Beispiel die mittlere Öffnung der Schlitzblende 11a, so dass eine Grobschätzung des Winkelbereichs in vertikaler Richtung erfolgen kann.

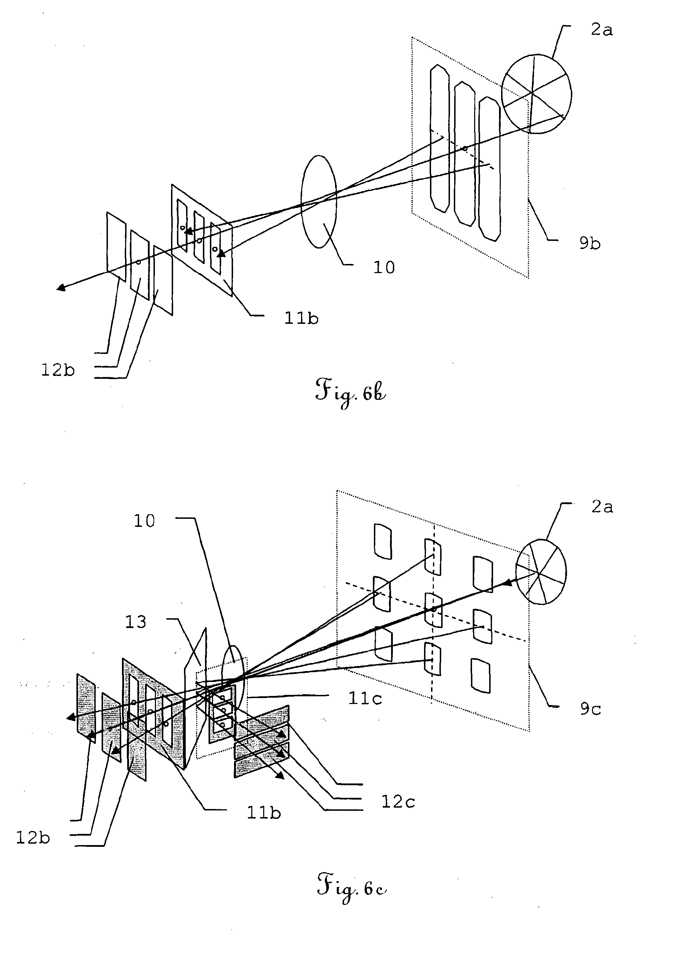

Eine andere Ausführungsform der erfindungsgemässen Empfangseinheit mit mehreren Fächern zeigt Fig.6b. Die Erzeugung mehrerer, nebeneinander angeordneter Empfangsfächer als Fächerbüschel 9b erfolgt durch die Verwendung einer strukturierten photosensitiven Empfangsfläche 12b in der zweiten Brennebene, insbesondere in Zusammenhang mit einer in gleicher Anordnung strukturierten Schlitzblende 11b. Diese Unterteilung der photosensitiven Empfangsfläche 12b, z.B. in einen linearen Array von Photodetektoren, erzeugt dabei den Büschel nebeneinander liegender Suchfächer. Als Beispiel sind hier 3 Fächer dargestellt, eine andere Fächerzahl lässt sich durch die Wahl einer geeigneten Unterteilung bewirken. So sind insbesondere auch Büschel mit zwei oder vier Fächern realisierbar. Der mittlere Fächer dieses Beispiels, welcher parallel zur Sendeachse liegt, reagiert auf den Retroreflektor 2a, der zur Sendeachse hin geneigte Fächer reagiert auf Objekte mit Einfachspiegelung, der dritte Fächer lediglich auf Sonnenreflexe. Eine strukturierte photosensitive Empfangsfläche 12b erhöht daher die Sicherheit bezüglich korrekter Identifikation reflektierender Objekte.

Eine erfindungsgemässe Empfangseinheit mit zweidimensionaler Strukturierung des Gesichtsfeldes ist in Fig.6c dargestellt. Durch die Kombination zweier strukturierter PIN-Diode, deren Strukturierungsausrichtung im rechten Winkel zueinander orientiert ist, kann das Gesichtfeld zweidimensional unterteilt werden. Die von der Empfangsoptik 10 mit ihrem Gesichtsfeld erfasste Strahlung wird über einen Strahlteiler 13 auf zwei unterschiedliche Detektoren geleitet. Der erste Detektor besteht aus einer vertikal strukturierten photosensitiven Empfangsfläche 12b und einer entsprechenden Schlitzblende 11b in der zweiten Brennebene. Der zweite Detektor besteht aus einer horizontal strukturierten photosensitiven Empfangsfläche 12c mit dazugehöriger Schlitzblende 11c in der ersten Brennebene. Durch diese senkrecht zueinander orientierte Strukturierung wird das Gesichtsfeld horizontal und vertikal unterteilt, so dass hieraus ein Büschel von jeweils wiederum strukturierten Fächern resultiert. In diesem Beispiel mit zwei nebeneinander liegenden PIN-Dioden wird dadurch Retroreflektion und gewöhnliche Spiegelreflektion mit zusätzlicher Richtungsinformation empfang- und damit unterscheidbar.

Als die beschriebenen photosensitiven Elemente 12a bzw. Empfangsflächen 12b und 12c können alle geeigneten Formen von ortssensitiven Detektoren wie z.B. Empfangsdioden bzw. Empfangsdiodenarrays oder PSD verwendet werden.

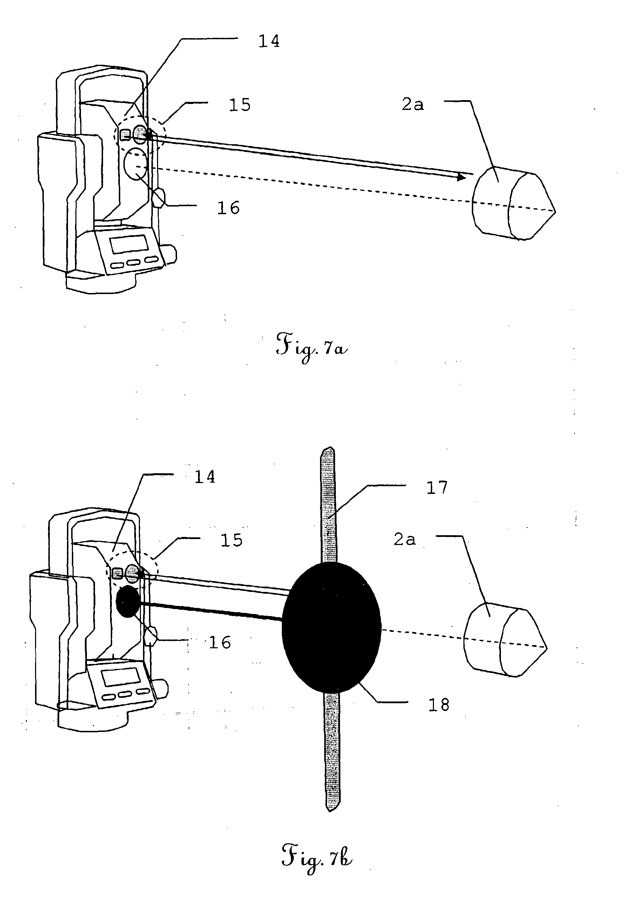

In Fig.7a-b wird die Kombination einer erfindungsgemässen Vorrichtung 15 mit einem AZE-System 16 zusammen mit dem schematischen Ablauf des Verfahrens dargestellt.

Fig.7a zeigt die bauliche Integration einer erfindungsgemässen Vorrichtung 15 und eines AZE-Systems in ein geodätisches Messgerät 14. Dabei ergänzt die erfindungsgemässe Vorrichtung 15 das beispielsweise in einem Theodolit als geodätischem Messgerät 14 schon vorhandene AZE-System 16. Die Emission zur Erkennung eines Retroreflektors 2a als Zielmarke durch erfindungsgemässe Vorrichtung 15 und AZE-System 16 erfolgt in diesem Beispiel im wesentlichen parallel zueinander.

In Fig.7b wird die Kombination der beiden Suchvorgänge schematisch gezeigt. Durch die erfindungsgemässe Vorrichtung 15 erfolgt ein schneller Umgebungsscan mit einem vertikalen Fächer 17 zur Bestimmung des Horizontalwinkels einer Zielmarke. In kurzer Zeit (wenigen Sekunden) ist ein Retroreflektor 2a als Zielmarke gefunden und deren Lage grob bestimmt. Die Messdaten der erfindungsgemässen Vorrichtung 15 können zwecks Unterstützung an andere Sensoren im geodätischen Messgerät 14 weitergeleitet werden, so beispielsweise an ein AZE-System 16. Dieses AZE-System 16 sucht danach mit seinem Fächer 18 ebenfalls den Retroreflektor 2a und bestimmt damit auch den Vertikalwinkel. Erfolgt eine Kanaltrennung zu anderen optischen Sensoren mittels geeigneter optischer Trägerwellenlängen, kann ein simultaner Einsatz mehrerer Sensoren im geodätischen Messgerät oder auch mehrerer geodätischer Messgeräte erfolgen.

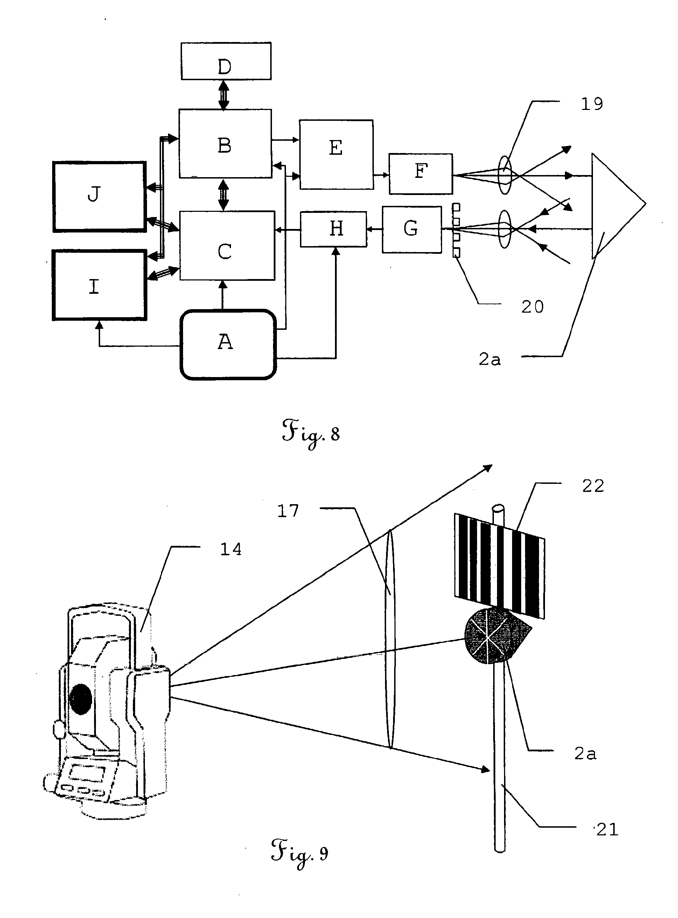

Fig.8 zeigt ein Blockschema für eine erfindungsgemässe Vorrichtung. Als gemeinsame Zeitbasis dient eine Systemuhr A, die mit dem Bildspeicher I, der elektronischen Auswerteeinheit C, der Steuer- und Signalverarbeitungseinheit B, dem Analog-Digital-Wandler H und dem Laser-Treiber und Controller E verbunden ist. Der Laser F emittiert Strahlung, die über eine strahlformende Optik 19 auf einen Retroreflektor gesandt wird. Nach der erfolgten Reflektion wird diese Strahlung empfangen und über eine bildformende Maske 20 auf den Detektor G geleitet. Das Signal dieses Detektors G wird von dem Analog-Digital-Wandler H konvertiert und in der elektronischen Auswerteeinheit C weiterverarbeitet. Diese steht in Verbindung mit der Steuer- und Signalverarbeitungseinheit B, dem Bildspeicher I und den Toleranzwerttabellen J für alle möglichen Zieltypen. Über eine Schnitt-stelle besteht die Möglichkeit einer Verbindung zu einem anderen System D, z.B. einem geodätischen Messgerät oder der Auswerteeinheit einer Drehvorrichtung.

In Fig.9 wird ein erfindungsgemässes geodätisches Vermessungssystem mit einer automatischen Zielerkennung anhand eines Barcode-Musters an der Zielmarke beschrieben. An einem Lotstock 21 einer Zielmarke ist neben der Zieipunktmarkierung, die hier exemplarisch als Retroreflektor 2a ausgebildet ist, zusätzlich eine codierte Zieltafel 22 angebracht. Die Codierung besteht aus optisch stark reflektierenden Streifen, welche bei einem Suchlauf sequentiell gescannt werden. Durch den vertikalen Fächer 17 wird ein ausreichend grosser vertikaler Winkel überstrichen, so dass eine parallele Ausleuchtung bzw. Erfassung von Zieltafel 22 und Retroreflektor 2a möglich ist. Das vom Suchsensor empfangene Signal ist zeitlich amplitudenmoduliert, der Code der Zieltafel wird dabei in eine zeitliche Abfolge transformiert. Als Ergebnis ist dadurch eine sehr rasche Zielsuche und Identifikation der Zielmarke möglich. Mittels einer Koordinaten-Datenbank lassen sich bestimmte Zielmarken, aber auch störende Gegenstände ausblenden. Solche Punkte werden nicht angefahren. In der Auswertung des entsprechenden Datenbildes steht neben der Objektdistanz und Objektgrösse auch die codierte Information der Zieltafel.

Es versteht sich, dass die dargestellten Figuren eine von vielen Ausführungsformen darstellen und der Fachmann alternative Realisierungsformen, z.B. unter Verwendung anderer Mittel zur Emission und zum Empfang elektromagnetischer Strahlung oder zur Signalaufnahme oder Signalverarbeitung, ableiten kann.

## Patentansprüche

1. Verfahren zum automatischen Auffinden von wenigstens einer Zielmarke mit einer Vorrichtung mit einer ersten Sendeeinheit (1),
mit einer ersten Empfangseinheit und
mit einer Auswerteeinheit,
wobei
• die erste Sendeeinheit (1) zur Beleuchtung der Zielmarke elektromagnetische Strahlung, vorzugsweise mit einer ersten Trägerwellenlänge, in Form eines über einen horizontalen Winkelbereich bewegbaren, insbesondere vertikalen, Sendefächers (17) emittiert, wobei dieser vorzugsweise über einen Vollkreis rotierbar ist;
• die erste Empfangseinheit innerhalb eines, vorzugsweise vertikalen, fächerförmigen Erfassungsbereichs von der Zielmarke reflektierte Signale (P2) empfängt, insbesondere mit einem ortsauflösenden optoelektronischen Detektor (4);
• die Auswerteeinheit die Position der Zielmarke, zumindest deren Horizontalwinkel, bestimmt,
• die von der ersten Sendeeinheit (1) ausgesandte elektromagnetische Strahlung eine erste Modulation, insbesondere Impulsmodulation, erfährt, vorzugsweise mit einer ersten Impulsrate zwischen 10 und 50 kHz, und
• die erste Empfangseinheit die von der Zielmarke reflektierten Signale (P2) in Zeitabhängigkeit erfasst und gegebenenfalls speichert,
**dadurch gekennzeichnet, dass**
die erste Empfangseinheit die empfangenen Signale mit jeweils einer Zeitmarke und jeweils einer Distanz, die aus einer mit den Signalen verbundenen Laufzeit abgeleitet wird, verknüpft erfasst, und gegebenenfalls in einer zweidimensionalen Datenstruktur, insbesondere mit Distanz und Winkel als Indexvariablen, speichert.

2. Verfahren nach Anspruch 1,
**dadurch gekennzeichnet, dass**
die erste Sendeeinheit (1) die elektromagnetische Strahlung in einem Sendefächer mit einem Öffnungswinkel zwischen 10° und 90° und/oder mit einer senkrecht zum Sendefächer beugungsbegrenzten Divergenz emittiert.

3. Verfahren nach Anspruch 1 oder 2,
**dadurch gekennzeichnet, dass**
die erste Auswerteeinheit aus den erfassten und/oder gespeicherten Signalen (5) scheinbare Objektausdehnungen ermittelt und mit für die zu findende Zielmarke charakteristischen Parametern vergleicht.

4. Verfahren nach einem der vorangehenden Ansprüche,
**dadurch gekennzeichnet, dass**
die Auswerteeinheit eine Plausibilitätsprüfung für die erfassten und/oder gespeicherten Signale (5) der scheinbaren Objektausdehnung durchführt, vorzugsweise durch Vergleich mit einer, insbesondere distanzabhängigen, Toleranzwerttabelle für Signalamplitude und/oder scheinbare Objektausdehnung.

5. Verfahren nach einem der vorangehenden Ansprüche,
**dadurch gekennzeichnet, dass**
die elektromagnetische Strahlung wenigstens eine zweite Impulsmodulation mit der ersten Impulsrate, aber mit einer gegenüber der ersten Impulsmodulation verringerten Amplitude erfährt, so dass wenigstens eine Folge von Doppelimpulsen (P11, P12) mit differierender Amplitude entsteht, insbesondere wobei von den Doppelimpulsen (P11, P12), insbesondere in Abhängigkeit von der Entfernung zur Zielmarke, nur jeweils zu einer der beiden Impulsmodulationen gehörige Signale erfasst und/oder ausgewertet werden.

6. Verfahren nach einem der vorangehenden Ansprüche,
**dadurch gekennzeichnet, dass**
• die erste Empfangseinheit und/oder die Auswerteeinheit bereits identifizierte Störobjekte und/oder bereits identifizierte Fremdziele ausblenden und/oder unterdrücken, und/oder
• die erste Empfangseinheit die Signale (P2, P21, P22) mit einer zusätzlichen Ortsinformation erfasst, vorzugsweise mittels einer horizontalen und/oder vertikalen Unterteilung des fächerförmigen Erfassungsbereichs, und/oder mittels einer weiteren Einrichtung, insbesondere einer automatischen Zielerfassungseinheit (16), in einem zusätzlichen Schritt eine Bestimmung des Vertikalwinkels der Zielmarke erfolgt.

7. Verfahren nach einem der vorangehenden Ansprüche,
**dadurch gekennzeichnet, dass**
die erste Sendeeinheit (1) oder eine weitere Sendeeinheit zusätzlich elektromagnetische Strahlung mit einer zweiten Trägerwellenlänge emittiert und dass gegebenenfalls eine weitere Empfangseinheit die von der Zielmarke reflektierten Signale erfasst, insbesondere wobei die Auswerteeinheit die Position der Zielmarke unter Verwendung der Signale der zweiten Trägerwellenlänge, insbesondere für eine Plausibilitätsprüfung, bestimmt.

8. Vorrichtung zum automatischen Auffinden der Position von wenigstens einer Zielmarke, vorzugsweise zur Verwendung in Verbindung mit einem Theodoliten,
mit einer Sendeeinheit (1), insbesondere mit einer Pulslaserdiode (1a), zur Beleuchtung der Zielmarke mit elektromagnetischer Strahlung in Form eines über einen horizontalen Winkelbereich bewegbaren, insbesondere vertikalen, Sendefächers (17), wobei dieser vorzugsweise über einen Vollkreis rotierbar ist;
mit einer, vorzugsweise biaxial zur Sendeeinheit angeordneten, Empfangseinheit mit einem optoelektronischen, insbesondere ortsauflösenden, Detektor (4) zur Erfassung eines von der Zielmarke reflektierten Signals (P2), wobei das Signal (P2) vom Detektor (4) innerhalb eines, vorzugsweise vertikalen, fächerförmigen Erfassungsbereichs erfasst wird, wobei der Erfassungsbereich über einen horizontalen Winkelbereich bewegbar, vorzugsweise über einen Vollkreis rotierbar, ist; und
mit einer Auswerteeinheit zur Bestimmung der Position der Zielmarke aus den Signalen (P2),
wobei elektromagnetische Strahlung eine erste Modulation, insbesondere eine Impulsmodulation, vorzugsweise mit einer ersten Impulsrate zwischen 10 und 50 kHz, aufweist und
wobei Empfangseinheit einen Zeitmesser, insbesondere zur Bestimmung der Laufzeit von der Zielmarke reflektierten Signale (P2) eines Impulses der elektromagnetischen Strahlung, aufweist,
wobei ein Speicher zur Speicherung der Signale (P2) vorhanden ist, insbesondere wobei die Empfangseinheit den Speicher aufweist,
**dadurch gekennzeichnet, dass**
die Empfangseinheit so ausgebildet ist, dass die empfangenen Signale mit jeweils einer Zeitmarke und jeweils einer Distanz, die aus einer mit den Signalen verbundenen Laufzeit abgeleitet wird, verknüpft erfasst, und gegebenenfalls in einer zweidimensionalen Datenstruktur, insbesondere mit Distanz und Winkel als Indexvariablen, gespeichert werden.

9. Vorrichtung nach Anspruch 8,
**dadurch gekennzeichnet, dass**
der, vorzugsweise variable, Öffnungswinkel des Sendefächers (17) der Sendeeinheit (1) zwischen 10° und 90° beträgt und/oder die Divergenz der Strahlung senkrecht zum Sendefächer (17) beugungsbegrenzt ist.

10. Vorrichtung nach einem der Ansprüche 8 oder 9,
**dadurch gekennzeichnet, dass**
• die Sendeeinheit (1) wenigstens eines der folgenden Mittel zur Erzeugung der Form des Sendefächers (17) aufweist
- Zylinderlinse (1c),
- Mikrolinsenarray,
- diffraktives optisches Element,
und/oder
• die elektromagnetische Strahlung wenigstens eine zweite Impulsmodulation mit der ersten Impulsrate, aber einer gegenüber der ersten Impulsmodulation verringerten Amplitude aufweist, so dass wenigstens eine Folge von Doppelimpulsen (P11, P12) mit differierender Amplitude entsteht.

11. Vorrichtung nach einem der Ansprüche 8 bis 10,
**dadurch gekennzeichnet, dass**
• die Auswerteeinheit eine Vorrichtung für Plausibilitätsprüfungen einer Zielmarke aufweist, vorzugsweise durch Vergleich mit einer, insbesondere distanzabhängigen, Toleranzwerttabelle für Signalstärke und/oder Objektgrösse,
und/oder
• die Empfangseinheit und/oder die Auswerteeinheit eine Einrichtung zur Ausblendung und/oder Unterdrückung von Störobjekten und/oder Fremdzielen aufweist.

12. Vorrichtung nach einem der Ansprüche 8 bis 11,
**dadurch gekennzeichnet, dass**
die Empfangseinheit wenigstens eines der folgenden Mittel zur Erzeugung eines fächerförmigen Erfassungsbereichs aufweist
- Zylinderlinse,
- Mikrolinsenarray mit zylindrischer Wirkung,
- Diffraktives optisches Element.

13. Vorrichtung nach einem der Ansprüche 8 bis 12,
**dadurch gekennzeichnet, dass**
der Detektor eines der folgenden Mittel zur Unterteilung des Erfassungsbereichs in Sektoren aufweist
- eine Blende (4a, 11a) mit einem photosensitiven Element (4b, 12, 12a);
- eine strukturierte, photosensitive Empfangsfläche (12b), insbesondere mit einem linearen Array aus photosensitiven Elementen und einer Blende (11b);
- zwei strukturierte, photosensitive Empfangsflächen (12b, 12c), insbesondere mit einem Strahlteiler (13) und zwei linearen Arrays aus photosensitiven Elementen, wobei ein Array durch eine Blende (11c) horizontal und ein Array durch eine Blende (11b) vertikal strukturiert ist;
- wobei die Blenden (4a, 11a, 11b, 11c) entweder als Schlitzblenden, vorzugsweise als bewegliche Schlitzblenden, und/oder als Blenden mit schaltbarer Transmission ausgebildet sind.

14. Empfangseinheit für eine Vorrichtung nach Anspruch 8, zur Erfassung und Speicherung eines von einer Zielmarke reflektierten Signals (P2),
mit einem optoelektronischen, insbesondere ortsauflösenden, Detektor (4), wobei der Erfassungsbereich der Empfangseinheit fächerförmig mit vertikaler Ebene ausgebildet ist,
mit einem Zeitmesser, insbesondere zur Bestimmung der Laufzeit von der Zielmarke reflektierten Signale (P2) der elektromagnetischen Strahlung,
mit einem Speicher zur Speicherung der empfangenen Signale,
**dadurch gekennzeichnet, dass**
Detektor (4), Zeitmesser und Speicher so ausgebildet und angeordnet sind, dass die empfangenen Signale mit jeweils einer Zeitmarke und jeweils einer Distanz, die aus einer mit den Signalen verbundenen Laufzeit abgeleitet wird, verknüpft erfasst, und gegebenenfalls in einer zweidimensionalen Datenstruktur, insbesondere mit Distanz und Winkel als Indexvariablen, gespeichert werden.

15. Empfangseinheit nach Anspruch 14,
**gekennzeichnet durch**
wenigstens eines der folgenden Mittel zur Erzeugung eines fächerförmigen Erfassungsbereichs
- Zylinderlinse,
- Mikrolinsenarray mit zylindrischer Wirkung,
- Diffraktives optisches Element.

16. Empfangseinheit nach Anspruch 14 oder 15,
**gekennzeichnet durch**
eine Einrichtung zur Ausblendung und/oder Unterdrückung von Störobjekten und/oder Fremdzielen.

17. Empfangseinheit nach einem der Ansprüche 14 bis 16,
**dadurch gekennzeichnet, dass**
der Detektor (4) eines der folgenden Mittel zur Unterteilung des Erfassungsbereichs in Sektoren aufweist
- eine Blende (4a, 11a) mit einem photosensitiven Element (4b, 12, 12a);
- eine strukturierte, photosensitive Empfangsfläche (12b), insbesondere mit einem linearen Array aus photosensitiven Elementen und einer Blende (11b);
- zwei strukturierte, photosensitive Empfangsflächen (12b, 12c), insbesondere mit einem Strahlteiler (13) und zwei linearen Arrays aus photosensitiven Elementen, wobei ein Array durch eine Blende (11c) horizontal und ein Array durch eine Blende vertikal (11b) strukturiert ist;
- wobei die Blenden (4a, 11a, 11b, 11c) entweder als Schlitzblenden, vorzugsweise als bewegliche Schlitzblenden, und/oder als Blenden mit schaltbarer Transmission ausgebildet sind.

18. Geodätisches Messgerät (14), insbesondere Theodolit oder Nivellier, mit einer Vorrichtung zum automatischen Auffinden von wenigstens einer Zielmarke nach einem der Ansprüche von 8 bis 13, wobei die elektromagnetische Strahlung eine erste Trägerwellenlänge aufweist.

19. Geodätisches Messgerät (14) nach Anspruch 18,
**gekennzeichnet durch**
eine automatische Zielsuchvorrichtung (16), insbesondere mit einem Sender zur Emission von elektromagnetischer Strahlung mit einer zweiten Trägerwellenlänge.

20. Geodätisches Vermessungssystem zur Verwendung mit einem Verfahren nach einem der Ansprüche 1 bis 7,
mit wenigstens einem geodätischen Messgerät (14) nach Anspruch 18 und
mit wenigstens einer Zielmarke, die wenigstens einen Reflektor (2a) und wenigstens einen eindimensionalen Strichcode (22) aufweist, wobei dessen Striche parallel zum Sendefächer (17) und/oder parallel zum fächerartigen Erfassungsbereich orientiert sind.

21. Geodätisches Vermessungssystem zur Verwendung mit einem Verfahren nach Anspruch 7,
mit wenigstens einem geodätischen Messgerät (14) nach Anspruch 19 und
mit wenigstens einer Zielmarke, die wenigstens einen Reflektor (2a) aufweist,
wobei das Reflexionsvermögen des Reflektors (2a) bezüglich der ersten und zweiten Trägerwellenlänge so abgestimmt ist, dass das Verhältnis der reflektierten Intensität von erster und zweiter Trägerwellenlänge eine Erkennung des Reflektors (2a) ermöglicht.

## Claims

1. Process for the automatic finding of at least one marker with a device
with a first transmitter unit (1),
with a first receiver unit and
with an analysis evaluation unit,
wherein
• the first transmitter unit (1) emits electromagnetic radiation to illuminate the marker, preferably with a first carrier wave length, in the form of a transmitting fan (17), especially a vertical fan, which is movable through a horizontal angular range, where the fan is preferably capable of being rotated through a full circle;
• the first receiving unit receives signals (P2) reflected fro the marker within a preferably vertical fan-shaped detection area, especially with a location-resolving optical-electronic detector (4);
• the analysis and evaluation unit determines the position of the marker, at least its horizontal angle;
• the electromagnetic radiation emitted from the first transmitting unit (1) undergoes a first modulation, especially pulse modulation, preferably with a first pulse rate between 10 and 50 kHz, and
• the first receiving unit detects the signal (P2) reflected from the marker, in time-dependent manner, preferably assigning a travel time connected to the signal to a distance and, if appropriate, stores it,
**characterized in that**,
the first receiving unit detects the signal received connected to, in each case, a time mark and/or a distance and, where appropriate, stores it in a two-dimensional data structure, especially one with distance and angles as index variables.

2. Process according to Claim 1,
**characterized in that**,
the first transmitter unit (1) emits the electromagnetic radiation in a transmitting fan with an opening angle between 10° and 90° and/or with a divergence limited by diffraction perpendicular to the transmitting fan.

3. Process according to Claim 1 or 2,
**characterized in that**,
the first analyzing and evaluating unit detects apparent object widths from the signals (5) that are detected and/or stored and compares them with characteristic parameters for the marker to be found.

4. Process according to one of the foregoing Claims,
**characterized in that**,
the analysis and evaluation unit performs a plausibility check for the signals (5) detected and/or stored of the apparent object width, preferably by comparing them with a tolerance value table, especially a distance-dependent one, for signal amplitude and/or apparent object width.

5. Process according to one of the foregoing Claims,
**characterized in that**,
the electromagnetic radiation undergoes at least a second pulse modulation with the first pulse rate, with a decreased amplitude compared to the first modulation, so that at least one series of double pulses (P11, P12) with differing amplitudes is created, particularly wherein of the double pulses (P11, P12), especially as a function of the distance to the marker, signals belonging to only one of the two pulse modulations are detected and/or analyzed.

6. Process according to one of the foregoing Claims,
**characterized in that**,
• the first receiving unit and/or the analysis and evaluation unit block out and/or suppress already identified interfering objects and/or already identified foreign markers, and/or
• the first receiving unit detects the signals (P2, P21, P22) with additional location information, preferably by means of a horizontal and/or vertical subdivision of the fan-shaped detection range and/or by means of a further device, especially an automatic marker detection unit (16), in a additional step, carries out a determination of the vertical angle of the marker.

7. Process according to one of the foregoing Claims,
**characterized in that**,
the first transmitter unit (1) or a further transmitter unit emits additional electromagnetic radiation with a second carrier wave length and that, where appropriate, a further receiving unit detects the signals reflected from the marker, particularly wherein the analysis and evaluation unit determines the position of the marker using the signal of the second carrier wave length, especially for a plausibility check.

8. Device for the automatic location of the position of at least one mark, preferably for use in connection with a theodolite,
with a transmitter unit (1), especially with a pulse laser diode (1a) to illuminate the marker with electromagnetic radiation in the form of a transmission fan (17), especially a vertical fan, which is movable over a horizontal angular range, where the fan is preferably rotatable through a full circle;
with a receiving unit preferably placed biaxially to the transmitter unit, with an optical-electronic, especially location-resolving, detector (4) for the detection of a signal (P2) reflected from the marker, wherein the signal (P2) is detected by the detector (4) within a preferably vertical, fan-shaped detection range, where the detection range is movable over a horizontal angular range, preferably rotatable through a full circle; and
with an analysis and evaluation unit for the determination of the position of the marker from the signals (P2),
wherein the electromagnetic radiation shows a first modulation, especially a pulse modulation, preferably with a pulse rate between 10 and 50 kHz, and
wherein the receiving unit includes a time measuring device especially for the determination of the running time of the signals (P2) reflected form the marker of a pulse of the electromagnetic radiation,
wherein a memory for storing the signals (P2) is provided, particularly wherein the receiving unit includes the memory,
**characterized in that**,
the receiving unit is designed in such a manner that the signals are received, associated in each case with a time marker and/or associated with a distance, and possibly stored in a two-dimensional data structure, especially with distance and angle as index variables.

9. Device according to Claim 8,
**characterized in that**,
the preferably variable opening angle of the transmitting fan (17) of the transmitter unit (1) is between 10° and 90° and/or the divergence of the beam perpendicular to the transmitting fan (17) is diffraction-limited.

10. Device according to one of the Claims 8 or 9,
**characterized in that**,
the transmitter unit (1) includes at least one of the following means to generate the shape of the transmitting fan (17)
- cylindrical lens (1c),
- micro lens array,
- diffractive optical element,
and/or
• the electromagnetic radiation includes at least a second pulse modulation with the first pulse rate, but with a decreased amplitude compared to the first pulse modulation, so that at least one series of double pulses (P11, P 12) with differentiating amplitudes are created.

11. Device according to one of the Claims 8 through 10,
**characterized in that**,
• the analysis and evaluation unit includes a device for plausibility testing of a marker, preferably by comparison with a tolerance value table, especially distance-dependent, for signal strength and/or object size,
and/or
• the receiving unit and/or the analysis and evaluation unit includes an arrangement for blocking and/or suppressing interfering objects and/or foreign markers.

12. Device according to one of the Claims 8 through 11,
**characterized in that**,
the receiving unit includes at least one of the following means for generating a fan-shaped detection range.
- cylindrical lens,
- micro lens array with cylindrical effect,
- diffractive optical element.

13. Device according one of the Claims 8 through 12,
**characterized in that**,
the detector has one of the following means to subdivide the detection range into sectors
- an aperture (4a, 11a) with a photosensitive element (4b, 12, 12a);
- a structured, photosensitive receiving surface (12b), especially with a linear array of photosensitive elements and an aperture (11b);
- two structured, photosensitive receiving surfaces (12b, 12c), especially with a beam splitter (13) and two linear arrays made of photosensitive elements, wherein one array is structured horizontally through an aperture (11c) and one array vertically through an aperture (11b);
- wherein the apertures (41, 11a, 11b, 11c) are shaped either as slit apertures, preferably movable slit apertures, and/or as apertures with switchable transmission.

14. Receiving unit according to Claim 8 to detect and store a signal (P2) reflected from a marker,
with an optical-electronic, especially location-discriminating, detector (4), wherein the detection range of the receiving unit is fan shaped in a vertical plane;
with a time measuring device of the electromagnetic radiation, especially for the determination of the running time of the signal (P2) reflected from the marker,
with a memory to store the signals received,
**characterized in that**,
detector (4), time measuring device and memory are formed and arranged in such a manner that the signals received are detected each connected to a time marker and/or each connected to a distance and, if appropriate, are stored in two-dimensional data structure, especially with distance and angle as index variables.

15. Receiving unit according to Claim 14,
**characterized by**,
at lease one of the following means to generate a fan-shaped detection range
- cylindrical lens,
- micro lens array with cylindrical effect,
- diffractive optical element.

16. Receiving unit according to Claim 19 or 20,
**characterized by**,
a device for blocking and/or suppression of interference objects and/or foreign markers.

17. Receiving unit according to one of the Claim 14 through 16,
**characterized in that**,
the detector (4) has one of the following means to subdivide the detection range into sectors
- an aperture (4a, 11a) with a photosensitive element (4b, 12, 12a);
- a structured, photosensitive receiving surface (12b), especially with a linear array of photosensitive elements and an aperture (11b);
- two structured, photosensitive receiving surfaces (12b, 12c), especially with a beam splitter (13) and two linear arrays made of photosensitive elements, wherein one array is structured horizontally through an aperture (11c) and one array vertically through an aperture (11b);
- wherein the apertures (41, 11a, 11b, 11c) are shaped either as slit apertures, preferably movable slit apertures, and/or as apertures with switchable transmission.

18. Geodetic measuring device (14), especially a theodolite or level, with a device for the automatic finding of at least one marker, according to one of the Claims 8 through 13, wherein the electromagnetic radiation has a first carrier wave length.

19. Geodetic measuring device (14), according to Claim 18,
**characterized by**,
an automatic search device (16), especially with a transmitter to emit electromagnetic radiation, with a second carrier wave length.

20. Geodetic measuring system for use with a process, according to one of the Claims 1 through 7,
with at least one geodetic measuring device (14), according to one of the Claim 18 and
with at least one marker, which includes at least one reflector (2a) and at least one one-dimensional bar code (22), wherein these bars are oriented parallel to the transmitting fan (17) and/or parallel to the fan-shaped detection range.

21. Geodetic measuring system for use with a process, according to Claims 7,
with at least one geodetic measuring device (14), according to Claim 19 and
with at least one marker, which has at least one reflector (2a),
wherein the reflectivity of the reflector (2a) is adjusted with respect to the first and second carrier wave length in such a manner that the ratio of the reflected intensity from the first and second carrier wave lengths makes it possible to recognize the reflector (2a).

## Revendications

1. Procédé pour la localisation automatique d'au moins une cible avec un dispositif avec une première unité d'émission (1),
avec une première unité de réception et
avec une unité d'évaluation,
cependant que
• la première unité d'émission (1) pour l'éclairage de la cible émet un rayonnement électromagnétique, de préférence avec une première longueur d'ondes porteuses, sous forme d'une boîte d'émission (17) en particulier verticale, mobile sur une plage angulaire horizontale, cependant que celle-ci est de préférence rotative sur un cercle complet ;
• la première unité de réception reçoit des signaux réfléchis par la cible à l'intérieur d'une plage de détection de préférence verticale, en forme d'éventail, en particulier avec un détecteur optoélectronique à résolution spatiale (4) ;
• l'unité d'évaluation détermine la position de la cible, au moins son angle horizontal ;
• le rayonnement électromagnétique émis par la première unité d'émission (1) subit une première modulation, en particulier une modulation d'impulsions, de préférence avec une première cadence d'impulsions entre 10 et 50 Hz et
• la première unité de réception détecte et éventuellement mémorise les signaux réfléchis par la cible (P2) en fonction du temps,
**caractérisé en ce que**
la première unité de réception détecte les signaux reçus associés à respectivement une marque de temps et respectivement une distance qui est dérivée d'une durée liée aux signaux et, éventuellement, les mémorise dans une structure de données bidimensionnelle, en particulier avec la distance et l'angle comme variables d'index.

2. Procédé selon la revendication 1,
**caractérisé en ce que**
la première unité d'émission (1) émet le rayonnement électromagnétique dans un éventail d'émission avec un angle d'ouverture entre 10° et 90° et/ou avec une divergence à diffraction limitée perpendiculairement à l'éventail d'émission.

3. Procédé selon la revendication 1 ou 2,
**caractérisé en ce que**
la première unité d'évaluation détermine, à partir des signaux détectés et/ou mémorisés (5), des extensions d'objet apparentes et les compare à des paramètres caractéristiques de la cible à trouver.

4. Procédé selon l'une des revendications précédentes,
**caractérisé en ce**
**que** l'unité d'évaluation exécute un contrôle de plausibilité pour les signaux détectés et/ou mémorisés de l'extension d'objet apparente, de préférence par comparaison avec un tableau de valeurs de tolérance, pour l'amplitude du signal et/ou l'extension d'objet apparente, en particulier en fonction de la distance.

5. Procédé selon l'une des revendications précédentes,
**caractérisé en ce**
**que** le rayonnement électromagnétique subit au moins une seconde modulation d'impulsions avec la première cadence d'impulsions mais avec une amplitude moindre par rapport à la première cadence d'impulsions si bien qu'au moins une séquence d'impulsions doubles (P11, P12) se forme avec une amplitude qui diffère, en particulier cependant que parmi les doubles impulsions (P11, P12) seulement des signaux qui font respectivement partie d'une des deux modulations d'impulsions sont détectés et/ou évalués, en particulier en fonction de la distance de la cible.

6. Procédé selon l'une des revendications précédentes,
**caractérisé en ce que**
• la première unité de réception et/ou l'unité d'évaluation masque et/ou supprime des objets parasites déjà identifiés et/ou des cibles étrangères déjà identifiées et/ou
• la première unité de réception détecte les signaux (P2, P21, P22) avec une information de localisation supplémentaire, de préférence au moyen d'une division horizontale et/ou verticale de la zone de détection en forme d'éventail et/ou une détermination de l'angle vertical de la cible se fait dans une étape supplémentaire au moyen d'un autre dispositif, en particulier d'une unité de détection de cible automatique (16).

7. Procédé selon l'une des revendications précédentes,
**caractérisé en ce**
**que** la première unité d'émission (1) ou une autre unité d'émission émet un rayonnement électromagnétique supplémentaire avec une seconde longueur d'ondes porteuses et que, le cas échéant, une unité de réception supplémentaire détecte les signaux réfléchis par la cible, en particulier cependant que l'unité dévaluation détermine la position de la cible en utilisant les signaux de la seconde longueur d'ondes porteuses, en particulier pour un examen de plausibilité.

8. Dispositif pour la localisation automatique de la position d'au moins une cible, de préférence pour utiliser en relation avec un théodolite,
avec une unité d'émission (1), en particulier avec une diode laser pulsé (1a) pour l'éclairage de la cible avec rayonnement magnétique sous forme d'une boîte d'émission (17) en particulier verticale, mobile sur une plage angulaire horizontale, cependant que celle-ci est de préférence rotative sur un cercle complet ;
avec une unité de réception, placée de préférence de manière biaxiale par rapport à l'unité d'émission, avec un détecteur optoélectronique (4), en particulier à résolution spatiale, pour la détection d'un signal (P2) réfléchi par la cible, cependant que le signal est détecté par le détecteur (4) à l'intérieur d'une plage de détection en forme d'éventail, de préférence verticale, cependant que la plage de détection est mobile sur une plage angulaire horizontale, de préférence rotative sur un cercle complet et
avec une unité d'évaluation pour déterminer la position de la cible à partir des signaux (P2),
cependant que le rayonnement électromagnétique présente une première modulation, en particulier une modulation d'impulsions, de préférence avec une première cadence d'impulsions entre 10 et 50 Hz et
cependant que l'unité de réception présente un compteur de temps, en particulier pour déterminer la durée des signaux (P2) d'une impulsion du rayonnement électromagnétique réfléchis par la cible,
cependant qu'il existe une mémoire pour stocker les signaux (P2), en particulier cependant que l'unité de réception présente la mémoire,
**caractérisé en ce que**
l'unité de réception est configurée de telle manière que les signaux reçus sont détectés associés à respectivement une marque de temps et respectivement à une distance qui est dérivée d'une durée liée aux signaux et, le cas échéant, mémorisés dans une structure de données bidimensionnelle, en particulier avec la distance et l'angle comme variables d'index.

9. Dispositif selon la revendication 8,
**caractérisé en ce que**
l'angle d'ouverture, de préférence variable, de l'éventail d'émission (17) de l'unité d'émission (1) est entre 10° et 90° et/ou la divergence du rayonnement perpendiculairement à l'éventail d'émission (17) est à diffraction limitée.

10. Dispositif selon l'une des revendications 8 ou 9,
**caractérisé en ce que**
• l'unité d'émission (1) présente au moins l'un des moyens suivants pour produire la forme de l'éventail d'émission (17) :
- une lentille cylindrique (1c),
- un réseau de microlentilles,
- un élément optique diffractif.
et/ou
• le rayonnement électromagnétique présente au moins une seconde modulation d'impulsions avec la première cadence d'impulsions mais avec une amplitude moindre par rapport à la première cadence d'impulsions si bien qu'au moins une séquence d'impulsions doubles (P11, P12) se forme avec une amplitude qui diffère.

11. Dispositif selon au moins l'une des revendications 8 à 10,
**caractérisé en ce que**
• l'unité d'évaluation présente un dispositif pour des contrôles de plausibilité d'une cible, de préférence par comparaison avec un tableau de valeurs de seuils de tolérance en fonction de la distance pour le niveau de signal et/ou la grandeur de l'objet
et/ou
• l'unité de réception et/ou l'unité d'évaluation présente un dispositif pour masquer et/ou pour supprimer des objets parasites et/ou des cibles étrangères.

12. Dispositif selon au moins l'une des revendications 8 à 11,
**caractérisé en ce que**
l'unité de réception présente au moins l'un des moyens suivants pour produire une plage de détection en forme d'éventail:
- une lentille cylindrique (1c),
- un réseau de microlentilles,
- un élément optique diffractif.

13. Dispositif selon au moins l'une des revendications 8 à 12,
**caractérisé en ce que**
le détecteur présente l'un des moyens suivants pour diviser la plage de détection en secteurs :
- un diaphragme (41, 11a) avec un élément photosensible (4b, 12, 12a) ;
- une surface de réception structurée, photosensible (12b), en particulier avec un dispositif linéaire composé d'éléments photosensibles et d'un diaphragme (11 b) ;
- deux surfaces de réception structurées, photosensibles (12b, 12c), en particulier avec un séparateur de faisceau (13) et deux dispositifs linéaires composés d'éléments photosensibles, cependant qu'un dispositif est structuré horizontalement par un diaphragme (11c) et qu'un dispositif est structuré verticalement par un diaphragme (11 b),
- cependant que les diaphragmes (4a, 11a, 11 b, 11 c) sont configurés soit comme des diaphragmes à fente, de préférence comme des diaphragmes à fente mobiles et/ou comme des diaphragmes avec transmission commutable.

14. Unité de réception pour un dispositif selon la revendication 8 pour la détection et la mémorisation d'un signal (P2) réfléchi par une cible
avec un détecteur optoélectronique (4), en particulier à résolution spatiale, la plage de détection de l'unité de réception étant configurée en forme d'éventail avec un plan vertical,
avec un compteur de temps, en particulier pour déterminer la durée des signaux (P2) du rayonnement électromagnétique réfléchis par la cible,
avec une mémoire pour la mémorisation des signaux reçus,
**caractérisée en ce que**
le détecteur (4), le compteur de temps et la mémoire sont configurés et placés de telle manière que les signaux reçus sont détectés associés à respectivement une marque de temps et à respectivement une distance qui est dérivée d'une durée liée aux signaux et, le cas échéant, mémorisés dans une structure de données bidimensionnelle, en particulier avec la distance et l'angle comme variables d'index.

15. Unité de réception selon la revendication 14,
**caractérisée par**
au moins l'un des moyens suivants pour produire une plage de détection en forme d'éventail:
- une lentille cylindrique (1 c),
- un réseau de microlentilles,
- un élément optique diffractif.

16. Unité de réception selon la revendication 14 ou 15,
**caractérisée par**
un dispositif pour masquer et/ou supprimer des objets parasites et/ou des cibles étrangères.

17. Unité de réception selon l'une des revendications 14 à 16,
**caractérisée en ce que**
le détecteur (4) présente l'un des moyens suivants pour diviser la plage de détection en secteurs :
- un diaphragme (41, 11a) avec un élément photosensible (4b, 12, 12a) ;
- une surface de réception structurée, photosensible (12b), en particulier avec un dispositif linéaire composé d'éléments photosensibles et d'un diaphragme (11 b) ;
- deux surfaces de réception structurées, photosensibles (12b, 12c), en particulier avec un séparateur de faisceau (13) et deux dispositifs linéaires composés d'éléments photosensibles, cependant qu'un dispositif est structuré horizontalement par un diaphragme (11c) et qu'un dispositif est structuré verticalement par un diaphragme (11 b),
- cependant que les diaphragmes (4a, 11a, 11 b, 11 c) sont configurés soit comme des diaphragmes à fente, de préférence comme des diaphragmes à fente mobiles et/ou comme des diaphragmes avec transmission commutable.

18. Appareil de mesure géodésique (14), en particulier théodolite ou niveau avec un dispositif pour la location d'au moins une cible selon l'une des revendications 8 à 13, cependant que le rayonnement électromagnétique présente une longueur d'ondes porteuses.

19. Appareil de mesure géodésique (14) selon la revendication 18,
**caractérisé par**
un dispositif automatique de recherche de cible (16), en particulier avec un émetteur pour l'émission de rayonnement électromagnétique avec une seconde longueur d'ondes porteuses.

20. Système de mesure géodésique pour utilisation avec un procédé selon l'une des revendications 1 à 7,
avec au moins un appareil de mesure géodésique (14) selon la revendication 18 et
avec au moins une cible qui présente au moins un réflecteur (2a) et au moins un code-barres unidimensionnel (22), cependant que ses barres sont orientées parallèlement à l'éventail émetteur (17) et/ou parallèlement à la plage de détection de type éventail.

21. Système de mesure géodésique pour utilisation avec un procédé selon la revendication 7
avec au moins un appareil de mesure géodésique (14) selon la revendication 19 et
avec au moins une cible qui présente au moins un réflecteur (2a),
cependant que le pouvoir de réflexion du réflecteur (2a) est adapté pour ce qui est de la première et de la seconde longueur d'ondes porteuses de telle manière que le rapport de l'intensité réfléchie de la première et de la seconde longueur d'ondes porteuses permet une reconnaissance du réflecteur (2a).
